# EUROPÄISCHE PATENTANMELDUNG

(11) **EP 3 684 031 A1**
(43) Veröffentlichungstag der Anmeldung: **22.07.2020**
(21) Anmeldenummer: 19152013.9
(22) Anmeldetag: 16.01.2019
(51) Int. Cl.: H04L 29/08, H04W 4/18, H04W 4/029, H04W 4/80, G05B 19/418

(54) **VERFAHREN ZUM ÜBERTRAGEN VON DATEN AUS EINER VIELZAHL VON GERÄTEN IN EINER WEIT VERTEILTEN ANLAGE AN EINE ZENTRALE EINRICHTUNG**

(71) Anmelder: Siemens Aktiengesellschaft, 80333 München (DE)
(72) Erfinder: Huck, Ralf, 63538 Großkrotzenburg (DE)

(57) **Zusammenfassung**

Verfahren zum Übertragen von Daten aus einer Vielzahl von Geräten (1, 2, 3, 4) in einer weit verteilten Anlage an eine zentrale Einrichtung (15), gekennzeichnet durch:
Ausstatten des in der Anlage tätigen und sich dort bewegenden Personals (6, 7, 8) mit mobilen Kommunikationsendgeräten (9, 10, 11) die zum Empfangen, Speichern und Senden von Daten ausgebildet sind und jeweils ein im Hintergrund laufendes Anwendungsprogramm (14) enthält,
die automatisch eine kurzreichweitige Funkverbindung (5) zwischen dem Kommunikationsendgerät (9, 10, 11) und einem der Geräte (1, 2, 3, 4) aufbaut, sobald sich das Kommunikationsendgerät (9, 10, 11) in Funkreichweite des Gerätes (1, 2, 3, 4) befindet,
von dem Gerät bereitgestellte Daten über die kurzreichweitige Funkverbindung (5) aus diesem ausliest und mit einem Zeitstempel und ggf. einem Ortsstempel zwischenspeichert und eine von der kurzreichweitigen Funkverbindung (5) verschiedene weitere Funkverbindung (12, 13) zu der zentralen Einrichtung (15) aufbaut die zwischengespeicherten Daten mit dem Zeitstempel und ggf. dem Ortsstempel an diese überträgt.

## Beschreibung

Die Erfindung betrifft ein Verfahren zum Übertragen von Daten aus einer Vielzahl von Geräten in einer weit verteilten Anlage an eine zentrale Einrichtung.

Bei den Geräten kann es sich beispielsweise um Feldgeräte in einer automatisierten Prozessanlage handeln, die zur Erfassung und/oder Beeinflussung von Prozessgrößen (Prozessvariablen) dienen. Dabei dienen Messumformer (Sensoren) zur Erfassung von Prozessgrößen wie zum Beispiel Füllstand, Durchfluss, Druck, Temperatur oder pH-Wert. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann.

Feldgeräte erzeugen neben den unmittelbar für die Prozesssteuerung bzw. -regelung benötigten Daten (z. B. Messwerte) viele Zusatzinformationen, die es erlauben, Prozesse ständig zu optimieren und ungeplante Anlagenstillstände beispielsweise durch vorausschauende Wartung auf Basis von Diagnosedatenaus den Feldgeräten zu vermeiden. Die Auswertung solcher Daten erfolgt zentral, z. B. in einem Server oder einer Cloud.

Da Feldgeräte in vielen Anwendungen nur über analoge Ein-/ Ausgangskarten an Steuerungen oder Leitsysteme angebunden sind, können diese nicht auf die digitalen Daten der Feldgeräte zugreifen und an die zentrale Einrichtung übergeben. Die Daten von batteriebetriebenen Geräten können auch nicht ohne weitere Hilfsmittel an einen zentralen Server übergeben werden, weil diese Geräte normalerweise nicht über elektrische Leitungen oder eine langreichweitige Funkschnittstellen mit dem zentralen Server verbunden sind.

In den beiden genannten Fällen können die Daten beispielsweise über eine elektrische Serviceschnittstelle oder eine kurzreichweitige Funkschnittstelle (z. B. RFID, Bluetooth) des Gerätes ausgelesen werden. Jedoch ist in weit verteilten Anlagen die Entfernung zu dem zentralen Server sehr groß, so dass das Einsammeln der Daten nicht ohne weitere Hilfsmittel, z. B. im Falle der Funkschnittstelle über die nachträgliche Installation von Multiplexern/Gateways, erfolgen kann.

Bei den digitalen Daten kann es sich in der umfangreichsten Anwendung um Messwerte, Diagnose-, Kalibrier-, Konfigurations- oder Parametrierdaten der Geräte handeln. Die einfachste datentechnische Information ist demgegenüber die reine Anwesenheitserkennung, z. B. von bewegten Geräten mit Funkschnittstelle.

Mögliche Lösungen für das beschriebene Problem wären eine Modernisierung der Ein-/Ausgangsebene durch Austausch rein analoger Baugruppen durch Baugruppen mit zusätzlichen digitalen Kommunikationsmöglichkeiten (z. B. HART Kommunikation) oder das Nachrüsten aller Ein-/Ausgangskarten mit HART-Multiplexern zum parallelen Auslesen der Daten. Beides wäre jedoch mit hohem Aufwand und im erstgenannten Fall mit einem Anlagenstillstand (Produktionsausfall) für den Anlagenbetreiber verbunden.

Eine Alternative wären die Nachrüstung aller Feldgeräte mit einer Funkschnittstelle (second data channel) und der Aufbau einer funktechnischen Infrastruktur mit ortsfesten Access Points, Leitungen oder Repeatern und Gateways. In weit verteilten Anlagen kann eine solche funktechnische Infrastruktur sehr aufwendig und bei Fehlen geeigneter Energiequellen zu Versorgung der zusätzlich benötigten Komponenten auch unmöglich werden.

Schließlich können die Daten mit Hilfe von transportablen Parametrier/Konfigurationstools (PC oder Hand Held Terminal) manuell eingesammelt werden. Dies ist jedoch mit hohem personellem Aufwand verbunden. Die Daten stehen zunächst nur auf einem transportablen Tool zur Verfügung und müssten durch weitere Maßnahmen an eine multiuserfähige, konsistente Datenhaltung übergeben werden.

Aus SENSOR MAGAZIN 2/2016, Seiten 32-33 ist ein Sensor bekannt, der per Bluetooth Low Energy (BLE)-Funkverbindung mit einer speziellen Smartphone-App kommuniziert, wobei die Datenweitergabe an eine Cloud-Serviceplattform indirekt per App erfolgt. Auf der Serviceplattform wird ein virtuelles Datenabbild des Sensors geschaffen und mit aktuellen Daten versorgt. Zu dem "Smart Connected Sensor" (SCS) gehört allerdings immer eine spezielle Cloud-Serviceplattform (z. B. eine Private Cloud).
Gefunden am 21.11.2018 im Internet, URL:http://www.sensormagazin.de/dateien/smonline/redaktion/fa chartikel/fachartikel2_sm2_16.pdf.

Der Erfindung liegt die Aufgabe zugrunde, die Übertragung von Daten aus einer Vielzahl von Geräten innerhalb einer weit verteilten Anlage an eine zentrale Einrichtung, z. B. einen lokalen Server oder eine cloudbasierte Plattform, mit minimalem Aufwand zu ermöglichen.

Gemäß der Erfindung wird die Aufgabe durch das in Anspruch 1 angegebene Verfahren gelöst, von dem vorteilhafte Weiterbildungen in den Unteransprüchen angegeben sind.

Gegenstand der Erfindung ist somit ein Verfahren zum Übertragen von Daten aus einer Vielzahl von Geräten in einer weit verteilten Anlage an eine zentrale Einrichtung, bei dem in der Anlage tätiges und sich dort bewegendes Personal mit mobilen Kommunikationsendgeräten ausgestattet wird, die zum Empfangen, Speichern und Senden von Daten ausgebildet sind und jeweils ein im Hintergrund laufendes Anwendungsprogramm (App) enthalten, welches
- automatisch eine kurzreichweitige Funkverbindung zwischen dem Kommunikationsendgerät und einem Gerät aufbaut, sobald sich das Kommunikationsendgerät in Funkreichweite dieses Gerätes befindet,
- von dem Gerät bereitgestellte Daten über die kurzreichweitige Funkverbindung aus diesem ausliest und mit einem Zeitstempel zwischenspeichert,
- eine von der kurzreichweitigen Funkverbindung verschiedene weitere Funkverbindung zu der zentralen Einrichtung aufbaut und
- die zwischengespeicherten Daten mit dem Zeitstempel über die weitere Funkverbindung an die zentrale Einrichtung überträgt.

Als mobile Kommunikationsendgeräte kommen z. B. Smartphones, Tabletcomputer, Laptops oder andere geeignete Consumergeräte in Frage, die Daten empfangen, verarbeiten und wieder versenden.

Die Applikation zum Auslesen, Zwischenspeichern und Weiterleiten der Daten läuft automatisch im Hintergrund, ohne Eingreifen des mit den Kommunikationsendgeräten ausgestatteten und sich in der Anlage bewegenden Personals. Die Daten aus den Geräten werden also automatisch eingesammelt und weitergeleitet, wann immer dies nach Maßgabe des Anwendungsprogramms vorgesehen und funktechnisch möglich ist. Die Daten werden von den verschiedenen Kommunikationsendgeräten bzw. den auf ihnen laufenden Anwendungsprogrammen parallel und asynchron eingesammelt, wobei die Zeitstempel für Konsistenz und Synchronität der Daten für die spätere Verarbeitung in der zentralen Einrichtung sorgen, d. h, die übertragenen Daten können in der zentralen Einrichtung mit Hilfe der Zeitstempel zeitsynchron zusammengebaut und dargestellt werden.

Die Daten können zusätzlich zur Zeitstempelung auch mit Ortsstempeln versehen werden, um beispielsweise durch die zentrale Einrichtung mit Hilfe der Ortsstempel die Positionen der Geräte in der Anlage überprüfen oder im Falle von mobilen Geräten Bewegungsprofile der Geräte erstellen zu können.

Die Daten können zusammen mit einer Gerätekennung (unique identifier) von dem Gerät, z. B. Feldgerät in einer automatisierten Prozessanlage, bereitgestellt werden; bzw. die Daten beinhalten die jeweilige Gerätekennung. Die Zeitstempel und ggf. die Ortsstempel können ebenfalls von dem Gerät erzeugt und zusammen mit den Daten bereitgestellt werden. Es ist aber auch möglich, dass das dem Anwendungsprogramm in dem Kommunikationsendgerät die Zeitstempel und/oder Ortsstempel erzeugt und den gelesenen Daten zuordnet. So gehören zum Standard moderner Mobiltelefone Satellitenempfänger für das Global Positioning System (GPS) und WLAN, die eine genaue Geolokalisierung des jeweiligen Mobiltelefons ermöglichen.

Die Daten können über eine Funkverbindung nach dem Bluetooth-Standard oder einem anderem von dem Kommunikationsendgerät unterstützten Standard für eine kurzreichweitige Funkverbindung (z. B. NFC), aus den Geräten ausgelesen werden. Die Übertragung der gelesenen Daten an die zentrale Einrichtung kann über eine Funkverbindung nach einem Mobilfunk-Standard für Mobilfunknetze, z. b. GSM, erfolgen. Alternativ oder ergänzend können die Daten beispielsweise über eine WLAN-Verbindung an einen drahtlosen Zugangspunkt (Wireless Access Point) der zentralen Einrichtung übertragen werden, sobald sich das Kommunikationsendgerät in Funkreichweite dieses drahtlosen Zugangspunkts befindet.

Durch Parametrierung kann festgelegt werden, welche Daten wann und wie oft von dem Anwendungsprogramm ausgelesen werden und wann die zwischengespeicherten Daten an die zentrale Einrichtung übertragen werden. So kann in dem Anwendungsprogramm eine Wiederholrate parametriert wird, mit der die Daten bei längerem Aufenthalt des Kommunikationsendgeräts in Funkreichweite des Gerätes aus diesem ausgelesen werden. Die Parametrierung kann unmittelbar an dem Kommunikationsgerät durch den Benutzer erfolgen, oder alternativ in der zentralen Einrichtung, von wo aus sie über die weitere Funkverbindung an das Anwendungsprogramm in dem Kommunikationsendgerät übergeben wird. Im letztgenannten Fall kann das Anwendungsprogramm in vorteilhafter Weise völlig im Hintergrund ohne jede Interaktion mit dem Benutzer laufen.

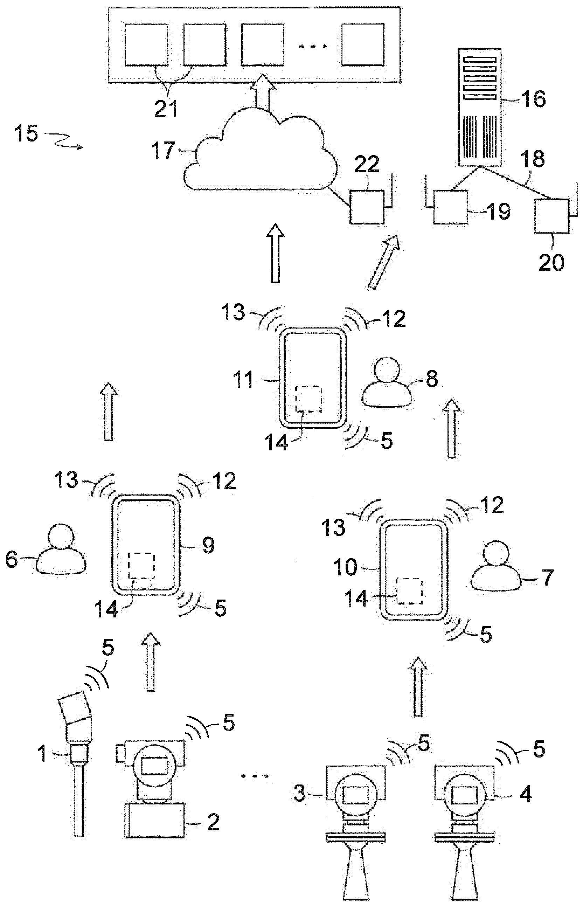

Im Weiteren wird die Erfindung anhand eines Ausführungsbeispiels und unter Bezugnahme auf die Figur der Zeichnung erläutert.

Die Figur zeigt einige Feldgeräte 1, 2, 3, 4, wie sie in einer Vielzahl in einer Prozessanlage vorhanden sind. Die Geräte 1, 2, 3, 4 weisen Funkschnittstellen auf, die kurzreichweitige Funkverbindungen 5 nach dem Bluetooth-Standard ermöglichen. Das sich in der Anlage aufhaltende Personal 6, 7, 8 ist mit mobilen Kommunikationsendgeräten 9, 10, 11 wie Smartphones, Tablets oder anderen mobilen Geräten mit vergleichbaren Funktionen ausgestattet, welche über drahtlose Kommunikationsmöglichkeiten wie Bluetooth 5, WLAN 12 und Mobilfunk (GSM) 13 sowie der Möglichkeit zur Bestimmung von Ort und Zeit verfügen. Auf jedem der Kommunikationsendgeräte 8, 9, 10 läuft ein Anwendungsprogramm (App) 14 mit der weiter unten beispielhaft beschriebenen, automatisch im Hintergrund ablaufenden Funktionalität zum Auslesen von Daten aus den Feldgeräten 1, 2, 3, 4 und zeitversetzten Übertragen der Daten an eine zentrale Einrichtung 15, hier z. B. ein lokaler Server 16 oder einen Cloud-Server 17. Der Server 16 ist z. B. über ein lokales Netzwerk 18 mit verteilten drahtlosen Zugangspunkten (Wireless Access Point) 19, 20 verbunden. Die übertragenen Daten können z. B. durch Applikationen 21 in der Cloud 17 ausgewertet und verarbeitet werden.

Die Funktionalität der Applikation 14 beinhaltet Folgendes:
- Verbindungsaufbau mit der Bluetooth-Funkschnittstelle der Feldgeräte 1, 2 oder 3, 4 sobald sich das Kommunikationsendgerät 9, 10 oder 11 in Reichweite des entsprechenden Gerätes befindet. Falls in einem Feldgerät keine Funkschnittstelle vorhanden ist, muss zunächst eine elektrische Punktzu-Punkt Verbindung mit dem Kommunikationsendgerät und einem geeigneten Modem hergestellt werden.
- Auslesen der relevanten und ggf. zuvor in dem Anwendungsprogramm 14 parametrierten Daten aus dem jeweiligen Feldgerät. Die Parametrierung kann wahlweise auch in der zugehörigen zentralen Einheit 15 erfolgen und an das Anwenderprogramm 14 übergeben werden, wenn das Kommunikationsgerät 9, 10 oder 11 in Reichweite ist. Auf diese Weise ist keine unmittelbare Interaktion mit dem Anwenderprogramm 14 durch das Personal 6, 7, 8 erforderlich.
- Ggf. wiederholtes Auslesen der relevanten Daten, die sich zwischenzeitlich geändert haben können, z. B. wenn sich das Kommunikationsendgerät länger in Reichweite des entsprechenden Feldgerätes befindet. Auch hier können die Häufigkeit des Auslesens und die relevanten Daten zuvor in dem Anwenderprogramm 14 parametriert werden.
- Zeit- und Ortsstempelung des die ausgelesenen Daten enthaltenden Datensatzes. Falls das Feldgerät selbst über einen Zeit- und/oder Ortsstempel verfügt, kann dieser genommen werden.
- Lokale, temporäre Speicherung der ausgelesenen Datensätze einschließlich Zeit- Ortsstempel und Kennung (unique identifier) des Felsgerätes. Die Kennung wird hierbei aus dem ausgelesenen Datensatz selbst erzeugt und kann geräte- oder anlagenspezifisch variieren (Anlagenkennzeichnen, HART-Tag, MAC-Adresse). Für den Spezialfall der Anwesenheitserkennung des Gerätes besteht der Datensatz nur aus Identifier, Zeit- und Ortsstempel.
- Übertragen (upload) aller ausgelesenen Datensätze über WLAN 12 an den zentralen Server 16, wenn sich das Kommunikationsendgerät 9, 10 oder 11 in der Nähe eines der drahtlosen Zugangspunkte 19, 20 befindet. Zeitpunkt und Häufigkeit der Uploads können in dem Anwendungsprogramm 14 parametriert werden.
   oder
- Übertragen (upload) aller ausgelesenen Datensätze an einen zentralen Server in der Cloud 17 direkt über Mobilfunk 13 oder indirekt über WLAN 12 und einen drahtlosen Zugangspunkt 22 mit Cloud Konnektivität sobald sich das Kommunikationsendgerät 9, 10 oder 11 im Empfangsbereich des Zugangspunktes 22 befindet. Die Zeitpunkte und Häufigkeit der Uploads können in dem Anwendungsprogramm 14 parametriert werden.
- Übertragen (download) einer Soll-Parametrierung für die Feldgeräte 1, 2, 3 4 von der zentralen Einrichtung 15.
- Vergleich der Sollparametrierung für die Feldgeräte 1, 2, 3 4 mit deren Ist-Parametrierung und wahlweise Meldung oder Überschreiben bei Abweichung, sobald sich das Kommunikationsendgerät 9, 10 oder 11 in Reichweite des entsprechenden Feldgerätes 1, 2, 3 4 befindet.

## Patentansprüche

1. Verfahren zum Übertragen von Daten aus einer Vielzahl von Geräten (1, 2, 3, 4) in einer weit verteilten Anlage an eine zentrale Einrichtung (15), bei dem in der Anlage tätiges und sich dort bewegendes Personal (6, 7, 8) mit mobilen Kommunikationsendgeräten (9, 10, 11) ausgestattet wird, die zum Empfangen, Speichern und Senden von Daten ausgebildet sind und jeweils ein im Hintergrund laufendes Anwendungsprogramm (14) enthalten, welches
- automatisch eine kurzreichweitige Funkverbindung (5) zwischen dem Kommunikationsendgerät (9, 10, 11) und einem der Geräte (1, 2, 3, 4) aufbaut, sobald sich das Kommunikationsendgerät (9, 10, 11) in Funkreichweite des Gerätes (1, 2, 3, 4) befindet,
- von dem Gerät bereitgestellte Daten über die kurzreichweitige Funkverbindung (5) aus diesem ausliest und mit einem Zeitstempel zwischenspeichert,
- eine von der kurzreichweitigen Funkverbindung (5) verschiedene weitere Funkverbindung (12, 13) zu der zentralen Einrichtung (15) aufbaut und
- die zwischengespeicherten Daten mit dem Zeitstempel über die weitere Funkverbindung (12, 13) an die zentrale Einrichtung (15) überträgt.

2. Verfahren nach Anspruch 1, **dadurch gekennzeichnet, dass** die Daten bei der Zeitstempelung auch mit einem Ortsstempel versehen werden.

3. Verfahren nach Anspruch 1 oder 2, **dadurch gekennzeichnet, dass** die Daten zusammen mit einer Gerätekennung von dem Gerät (1, 2, 3, 4) bereitgestellt werden, und die Gerätekennung zusammen mit den Daten an die zentrale Einrichtung (15) übertragen wird.

4. Verfahren nach einem der vorangehenden Ansprüche, **dadurch gekennzeichnet, dass** der Zeitstempel und/oder Ortsstempel von dem Gerät (1, 2, 3, 4) erzeugt und zusammen mit den Daten bereitgestellt wird.

5. Verfahren nach Anspruch 1, 2 oder 3, **dadurch gekennzeichnet, dass** der Zeitstempel und/oder Ortsstempel von dem Anwendungsprogramm (14) erzeugt und den gelesenen Daten zugeordnet wird.

6. Verfahren nach einem der vorangehenden Ansprüche, **dadurch gekennzeichnet, dass** die kurzreichweitige Funkverbindung (5) nach dem Bluetooth, NFC- (near field communication-) oder ZigBee-Standard erfolgt.

7. Verfahren nach einem der vorangehenden Ansprüche, **dadurch gekennzeichnet, dass** die weitere Funkverbindung (13) nach einem Mobilfunk-Standard erfolgt.

8. Verfahren nach einem der Ansprüche 1 bis 6, **dadurch gekennzeichnet, dass** die weitere Funkverbindung (12) über einen drahtlosen Zugangspunkt (19, 20, 22) der zentralen Einrichtung (15) erfolgt, sobald sich das Kommunikationsendgerät (9, 10, 11) in Funkreichweite des drahtlosen Zugangspunkts (19, 20, 22) befindet.

9. Verfahren nach einem der vorangehenden Ansprüche, **dadurch gekennzeichnet, dass** die auszulesenden Daten in dem Anwendungsprogramm (14) parametriert werden.

10. Verfahren nach Anspruch 9, **dadurch gekennzeichnet, dass** die Parametrierung in der zentralen Einrichtung (15) erfolgt und über die weitere Funkverbindung (12, 13) an das Anwendungsprogramm (14) übergeben wird.

11. Verfahren nach einem der vorangehenden Ansprüche, **dadurch gekennzeichnet, dass** in dem Anwendungsprogramm (14) eine Wiederholrate parametriert wird, mit der die Daten bei längerem Aufenthalt des Kommunikationsendgeräts (9, 10, 11) in Funkreichweite des Gerätes (1, 2, 3, 4) aus diesem ausgelesen werden.

12. Verfahren nach einem der vorangehenden Ansprüche, **dadurch gekennzeichnet, dass** in dem Anwendungsprogramm (14) Bedingungen parametriert werden, wann die zwischengespeicherten Daten an die zentrale Einrichtung (15) übertragen werden.
